# EUROPEAN PATENT APPLICATION

(11) **EP 2 728 215 A1**
(43) Date of publication of application: **07.05.2014**
(21) Application number: 13190540.8
(22) Date of filing: 28.10.2013
(51) Int. Cl.: F16D 65/18, F16D 65/56, F16D 121/02, F16D 121/24, F16D 125/40

(54) **Vehicle hydraulic brake device**

(30) Priority: 29.10.2012 TW 101139931
(71) Applicant: Lio Ho Machine Works Ltd., 32056 Taoyuan County (TW)
(72) Inventor: Yen, Jang-Yuan, 32056 Taoyuan County (TW); Lee, Shao-Ning, 32056 Taoyuan County (TW); Chen, Kun-I, 32056 Taoyuan County (TW)
(74) Representative: Granleese, Rhian Jane

(57) **Abstract**

A vehicle hydraulic brake device comprises: a housing (2) having an inner threaded part (32); a brake lining (31); a hollow piston (3) connected to the brake lining (31); a threaded spindle (33) extending into a piston chamber (30)_ and having a pushing end portion (334), a connecting end portion (335) and an outer thread (333) that engages the inner threaded part (32) ; a driving unit (4) ; and a coupling joint (5) coupling the connecting end portion (330) to the driving unit (4) in such a manner that the threaded spindle (33) is driven by the driving unit (4) through the coupling joint (5) to simultaneously co-rotate with the coupling joint (5) about an axis (X) and move relative to the coupling joint (5) and the piston (3) along the axis (X).

## Description

This invention relates to a vehicle hydraulic brake device, more particularly to a vehicle hydraulic brake device that is easy to assemble and that has the function of wear compensation.

U.S. Patent No. 6,536,561 discloses a conventional electromagnetic wheel brake device that includes a motor, a planetary gear set driven by the motor, a caliper housing, a spindle mounted rotatably in the caliper housing and coupled to the planetary gear set, a nut coupled to the spindle through threaded rollers, and a brake lining connected to the nut for pressing against a brake disc. The motor drives rotation of the spindle through the planetary gear set, which results in axial displacement of the nut and the brake lining. The aforesaid electromagnetic wheel brake device does not have a wear compensation mechanism for maintaining a constant brake clearance between the brake lining and the brake disc.

U.S. Patent Application Publication No. 2002/0041123 discloses a conventional vehicle hydraulic diskbrake that has a wear compensation mechanism for maintaining a constant brake clearance between the brake lining and the brake disc. The conventional vehicle hydraulic disk brake includes a caliper housing, a spring cage mounted in the caliper housing, a hollow piston mounted in the caliper housing, a bolt-shaped strut part (or a spindle) disposed in the piston and held by the spring cage, a sleeve-shaped strut part disposed in the piston and engaging and cooperating with the bolt-shaped strut part to define a non-self-locking steep-lead-angle thread paring, a spring washer arrangement mounted in the piston for preventing rotation of the sleeve-shaped strut part relative to the piston, and a brake lining connected to the piston for pressing against a brake disc. The spring cage is configured to lock the bolt-shaped strut part against rotation without impeding an axial displacement of the bolt-shaped strut part. Upon a hydraulic brake actuation, the piston is displaced a distance (not greater than a thread clearance which exists in the steep-lead-angle thread paring between the bolt-shaped strut part and the sleeve-shaped strut part) in an axial direction to permit pressing of the brake lining against the brake disc, and the sleeve-shaped strut part participates fully in the displacement of the piston. However, as a result of wear of the brake lining after repeated applications of the hydraulic disk brake, the piston has to travel a distance exceeding the thread clearance in order to apply the brake lining against the brake disc. As a consequence, the bolt-shaped strut part, which is held by the spring cage, prevents the sleeve-shaped strut part from participating in the entire displacement of the piston during brake actuation. Consequently, the sleeve-shaped strut part is released from constraint of the washer arrangement and an axial force which is transmitted by the steep-lead-angle thread paring generates a torque, by which the sleeve-shaped strut part is rotated relative to the bolt-shaped strut part. Because the effective length of an adjusting strut formed by the bolt-shaped strut part and the sleeve-shaped strut part is increased, the piston, after the brake actuation, is no longer able to return to its original starting position, with the result that the brake clearance is reduced back to its starting setpoint.

The aforesaid conventional vehicle hydraulic disk brake is disadvantageous in that the same requires a complicated and expensive wear compensation mechanism for wear compensation of the brake lining and that the assembly thereof is also complicated.

Therefore, an object of the present invention is to provide a vehicle hydraulic brake device that can overcome at least one of the aforesaid drawbacks associated with the prior art.

According to this invention, there is provided a vehicle hydraulic brake device that comprises: a housing having a first end and defining a disc-receiving space, a rod-extension channel and a piston-receiving space that extends between and that is in spatial communication with said disc-receiving space and said rod-extension channel, said housing having an inner threaded part that is formed in said rod-extension channel; a brake lining disposed in said disc-receiving space; a hollow piston disposed in said piston-receiving space, connected to said brake lining, and defining a piston chamber therein; a threaded spindle defining an axis, extending through said first end of said housing and said rod-extension channel and into said piston chamber, and having a pushing end portion, a connecting end portion that is opposite to said pushing end portion along the axis, and an outer thread that extends between said pushing end portion and said connecting end portion and that engages threadedly said inner threaded part, said pushing end portion being disposed in said piston chamber, said threaded spindle being simultaneously rotatable about the axis and movable along the axis relative to said housing between a braking position and a non-braking position, said pushing end portion pressing against said piston during movement of said threaded spindle from the non-braking position to the braking position; a driving unit; and a coupling joint coupling said connecting end portion of said threaded spindle to said driving unit in such a manner that said threaded spindle is driven by said driving unit through said coupling joint to simultaneously co-rotate with said coupling joint about the axis and move relative to said coupling joint and said housing along the axis.

In drawings which illustrate an embodiment of the invention,
Fig. 1 is a sectional view of the preferred embodiment of a vehicle hydraulic brake device according to the present invention, illustrating a state where a threaded spindle is disposed at a non-braking position;
Fig. 2 is a sectional view of the preferred embodiment illustrating a state where the threaded spindle is disposed at a braking position;
Fig. 3 is a fragmentary perspective view of the threaded spindle of the preferred embodiment;
Fig. 4 is a schematic view of the preferred embodiment illustrating a state where the threaded spindle is shifted from a previous non-braking position to a new non-braking position; and
Fig. 5 is a sectional view of the preferred embodiment illustrating how the piston is hydraulically moved from a non-stopping position to a stopping position.

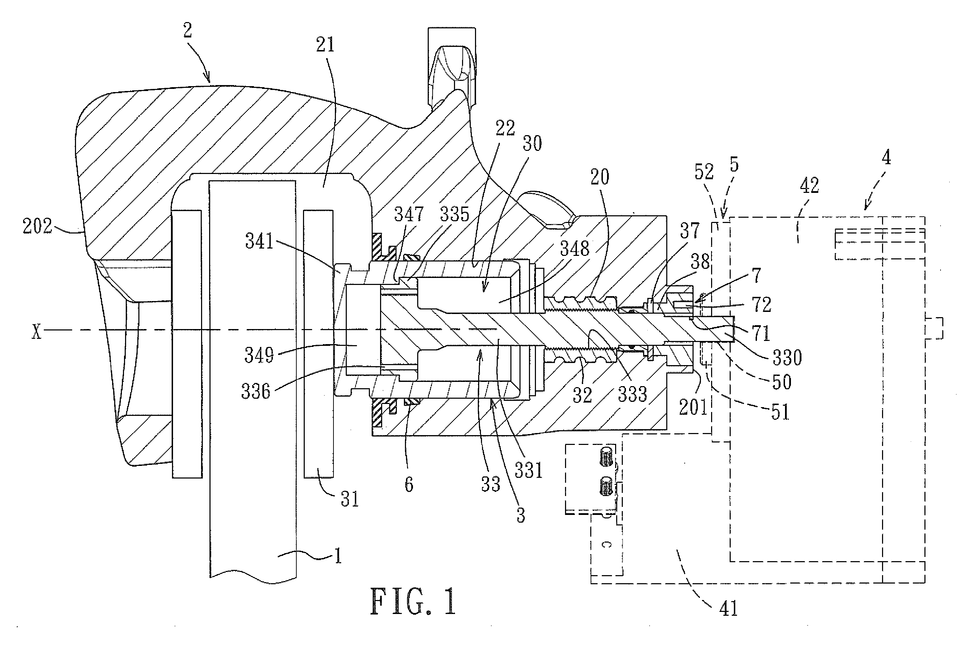

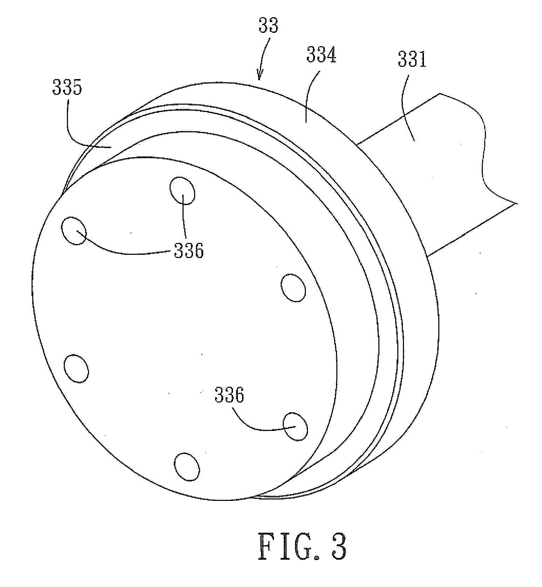

Figs. 1 to 4 illustrate the preferred embodiment of a vehicle hydraulic brake device with a function of wear compensation according to the present invention. In particular, the vehicle hydraulic brake device of the present invention can provide either a hydraulic brake actuation function or an electromechanical parking brake actuation function, and can be suitably used in an integrated Electronic Parking Brake (iEPB) system which has been developed in recent years by the vehicle industries.

The vehicle hydraulic brake device includes a housing 2, a brake lining 31, a hollow piston 3, a threaded spindle 33, a driving unit 4, a coupling joint 5, an urging member 6 and a detecting unit 7.

The housing 2 has first and second ends 201, 202, and defines a disc-receiving space 21, a rod-extension channel 20, and a piston-receiving space 22 that extends between and that is in spatial communication with the disc-receiving space 21 and the rod-extension channel 20. The housing 2 has an inner threaded part 32 that is fixed in the rod-extension channel 20, and is provided with a sealing sleeve 38 that is formed in the rod-extension channel 20 and held through a C-shaped retainer 37 and that extends from an end of the inner threaded part 32 to the first end 201. A brake disc 1 is securely received in the disc-receiving space 21. The brake lining 31 is movably disposed in the disc-receiving space 21, and is movable toward and away from the brake disc 1.

The hollowpiston 3 is disposed in the piston-receiving space 22, has a closed end 341 that is connected to the brake lining 31, and defines a piston chamber 30 therein.

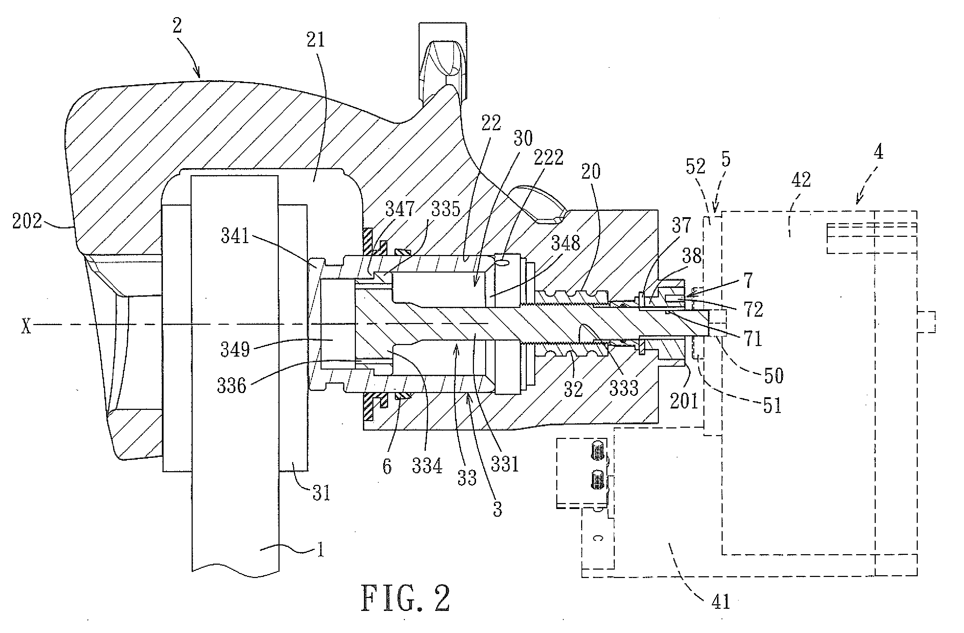

The threaded spindle 33 defines an axis (X), extends through the first end 201 of the housing 2 and the sealing sleeve 38 in the rod-extension channel 20 and into the piston chamber 30, and has a pushing end portion 334, a connecting end portion 330 that is opposite to the pushing end portion 334 along the axis (X), and an outer thread 333 that extends between the pushing end portion 334 and the connecting end portion 330 and that engages threadedly the inner threaded part 32. The pushing end portion 334 is disposed in the piston chamber 30. The threaded spindle 33 is simultaneously rotatable about the axis (X) and movable along the axis (X) relative to the housing 2 between a braking position (see Fig. 2) and a non-braking position (see Fig. 1). The pushing end portion 334 presses against the piston 3 during movement of the threaded spindle 33 from the non-braking position to the braking position.

The coupling joint 5 couples the connecting endportion 330 of the threaded spindle 33 to the driving unit 4 in such a manner that the threaded spindle 33 is driven by the driving unit 4 through the coupling joint 5 to simultaneously co-rotate with the coupling joint 5 about the axis (X) and move axially relative to the coupling joint 5 and the housing 2 along the axis (X).

The urging member 6 is mounted to the housing 2 for urging the piston 3 to move in the direction of movement of the threaded spindle 33 from the braking position back to the non-braking position.

The threaded spindle 33 further has a shank portion 331 that extends between the connecting end portion 330 and the pushing end portion 334. The pushing end portion 334 is enlarged in diameter from the shank portion 331, and defines a shoulder 335. The piston 3 has an inner surface that defines the piston chamber 30 and an inner neck 347. The shoulder 335 presses against the inner neck 347 during movement of the threaded spindle 33 from the non-braking position to the braking position.

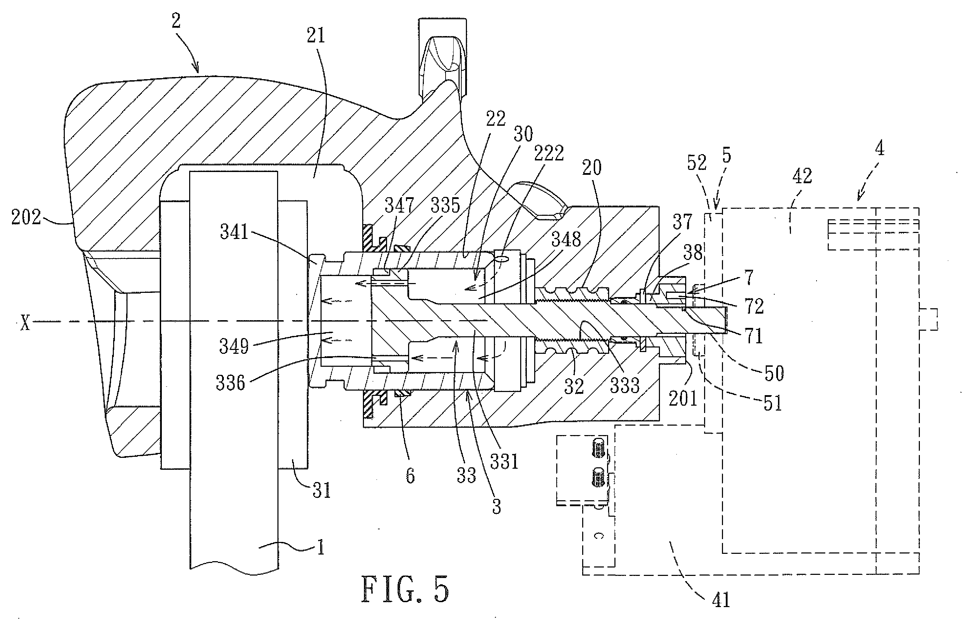

The pushing end portion 334 of the threaded spindle 33 divides the piston chamber 30 into first and second chamber halves 348, 349, and is formed with a plurality of fluid passages 336, such that the first chamber half 348 is in fluid communication with the second chamber half 349 through the fluid passages 336. Referring to Fig. 5, the piston 3 is adapted to be hydraulically driven by a hydraulic fluid, which is delivered from a hydraulic fluid source (not shown) into the piston chamber 30 through a fluid inlet 222, to move relative to the threaded spindle 33 and the housing 2 along the axis (X) from a non-stopping position (see Fig. 1) to a stopping position (see Fig. 5) during a hydraulic brake actuation. The inner neck 347 is in contact with the shoulder 335 when the piston 3 is disposed at the non-stopping position, and is spaced apart from the shoulder 335 when the piston 3 is disposed at the stopping position.

In this embodiment, the driving unit 4 includes a motor 41 and a planetary gear set 42 that couples the motor 41 to the coupling joint 5. The connecting end portion 330 of the threaded spindle 33 has a non-circular cross-section. The coupling joint 5 has a sleeve portion 51 and a circular plate portion 52 that is connected to the planetary gear set 42. The sleeve portion 51 protrudes coaxially from the circular plate portion 52, and cooperates with the circular plate portion 52 to define a non-circular hole 50 therein for receiving the connecting end portion 330 of the threaded spindle 33.

The detecting unit 7 is disposed adj acent to the housing 2, and is configured to be able to directly or indirectly measure the number of revolutions of the spindle 33, which can be used in the process of wear compensation of the brake lining 31. The detecting unit 7 includes a Hall effect sensor 72 and a magnetic element 71 that is secured to one of the driving unit 4 and the spindle 33. In this embodiment, the magnetic element 71 is secured to the connecting end portion 330 of the threaded spindle 33. The Hall effect sensor 72 is disposed adjacent to the magnetic element 71, is secured to the sealing sleeve 38 of the housing 2, is adapted to be connected to an Electronic Controlling Unit (ECU) (not shown), and cooperates with the magnetic element 71 to generate Hall effect when the magnetic element 71is brought into alignment with the Hall effect sensor 72 during rotation of the threaded spindle 33 so as to permit direct detection of the number of revolutions of the threaded spindle 33. It is noted that any rotatable part, such as an output shaft (not shown) of the motor 41 or the planetary gear set 42, which are co-rotatable with the spindle 33, can be used as an detected obj ect detected by the detecting unit 7, and that the number of revolutions of the rotatable part detected by the detecting unit 7 can be used to calculate the number of revolutions of the spindle 33, thereby permitting indirect measuring of the number of the revolutions of the spindle 33.

The motor 41 of the driving unit 4 is controlled by the ECU, such that upon electromechanical parking brake actuation, the motor 41 is actuated by the ECU to drive simultaneous rotation of the threaded spindle 33 and forward movement of the threaded spindle 33, which results in forward movement of the brake lining 31 toward the brake disc 1, and is disabled when an electric current of the motor 41 is increased to a value exceeding a predetermined current setpoint (which is stored in the ECU) by a friction force generated by the pressing of the brake lining 31 against the brake disc 1. It is noted that the outer thread 333 of the threaded spindle 33 and the inner threaded part 32 of the housing 2 are designed in such a manner that the engagement between the outer thread 333 of the threaded spindle 33 and the inner threaded part 32 of the housing 2 is sufficient to provide a self-locking effect (a large static friction) that prevents rotation of the threaded spindle 33, thereby maintaining the parking state of the vehicle hydraulic brake device, after the motor 41 is disabled.

When wearing of the brake lining 31 occurs after repeated applications of the vehicle hydraulic brake device, the clearance (n) between the brake lining 31 and the brake disc 1 is increased, i.e., the forward travelling distance of the threaded spindle 33 from the non-braking position to the braking position needs to also increase correspondingly. Hence, a wear compensation mechanism is needed to compensate for the wear of the brake lining 31 so as to maintain a constant clearance (n) between the brake lining 31 and the brake disc 1.

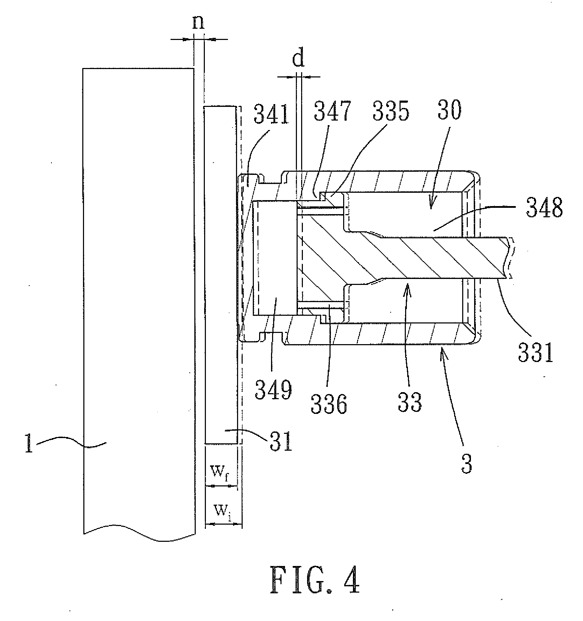

Referring to Fig. 4, in combination with Fig. 1, the wear compensation is realized by controlling a backward travelling distance of the threaded spindle 33. The operation of the wear compensation mechanism is described as follows. When the electromechanical parking brake actuation is cancelled, the motor 41 is actuated by the ECU to drive simultaneous rotation of the threaded spindle 33 (i.e., the motor 41 generates a torque overcoming the static friction) and backward movement of the threaded spindle 33. As the threaded spindle 33 moves backward, the urging member 6 urges backward movement of the piston 3, along with the brake lining 31, away from the brake disc 1. The Hall effect sensor 72 together with the ECU detects and counts the number of revolutions of the threaded spindle 33 during rotation of the threaded spindle 33. The motor 41 is then disabled to stop backward movement of the threaded spindle 33 by the ECU when the number of revolutions of the threaded spindle 33 is equal to a fixed predetermined number of revolutions that is stored in the ECU. Since the predetermined number of revolutions is fixed, the backward travelling distance of the threaded spindle 33 is also fixed each time the threaded spindle 33 is moved from the braking position to a new non-braking position, which is shifted a distance (d) from the previous non-braking position (see Fig. 4), i.e., the distance (d) is equal to a wear thickness (δ) of the brake lining 31, in which δ = Wᵢ - W_{f}, where Wᵢ (represented by the dash line in Fig. 4) is the previous thickness of the brake lining 31 before wearing and W_{f} (represented by the solid line in Fig. 4) is the new thickness of the brake lining 31afterwearing. Hence, the wear compensation can be easily realized in the vehicle hydraulic brake device by the incorporation of the detecting unit 7.

Moreover, by further designing the threaded spindle 33 to be simultaneously rotatable about the axis (X) and movable along the axis (X), the aforesaid sleeve-shaped strut part of the conventional vehicle hydraulic disk brake can be dispensed with and easy assembly of the vehicle hydraulic brake device can be achieved.

While the present invention has been described in connection with what is considered the most practical and preferred embodiment, it is understood that this invention is not limited to the disclosed embodiment but is intended to cover various arrangements included within the spirit and scope of the broadest interpretation and equivalent arrangements.

## Claims

1. A vehicle hydraulic brake device **characterized by**:
a housing (2) having a first end (201), and defining a disc-receiving space (21), a rod-extension channel (20) and a piston-receiving space (22) that extends between and that is in spatial communication with said disc-receiving space (21) and said rod-extension channel (20), said housing (2) having an inner threaded part (32) that is formed in said rod-extension channel (20);
a brake lining (31) disposed in said disc-receiving space (21);
a hollow piston (3) disposed in said piston-receiving space (22), connected to said brake lining (31), and defining a piston chamber (30) therein;
a threaded spindle (33) defining an axis (X), extending through said first end (201) of said housing (2) and said rod-extension channel (20) and into said piston chamber (30), and having a pushing end portion (334), a connecting end portion (330) that is opposite to said pushing end portion (334) along the axis (X), and an outer thread (333) that extends between said pushing end portion (334) and said connecting end portion (330) and that engages threadedly said inner threadedpart (32), said pushing end portion (334) being disposed in said piston chamber (30), said threaded spindle (33) being simultaneously rotatable about the axis (X) and movable along the axis (X) relative to said housing (2) between a braking position and a non-braking position, said pushing end portion (334) pressing against said piston (3) during movement of said threaded spindle (33) from the non-braking position to the braking position;
a driving unit (4); and
a coupling joint (5) coupling said connecting end portion (330) of said threaded spindle (33) to said driving unit (4) in such a manner that said threaded spindle (33) is driven by said driving unit (4) through said coupling joint (5) to simultaneously co-rotate with said coupling joint (5) about the axis (X) and move relative to said coupling joint (5) and said housing (2) along the axis (X).

2. The vehicle hydraulic brake device of claim 1, further **characterized by** a detecting unit (7) that is disposed adjacent to said housing (2) and that is configured to be able to directly or indirectly measure the number of revolutions of said spindle (33).

3. The vehicle hydraulic brake device of claim 2, **characterized in that** said detecting unit (7) includes a magnetic element (71) and a sensor (72), saidmagnetic element (71) being secured to one of said threaded spindle (33) and said driving unit (4), said sensor (72) being disposed adjacent to and cooperating with said magnetic element (71) to detect the number of revolutions of said threaded spindle (33).

4. The vehicle hydraulic brake device of claim 1, **characterized in that** said threaded spindle (33) further has a shank portion (331) that extends between said connecting end portion (330) and said pushing end portion (334), said pushing end portion (334) being enlarged in diameter from said shank portion (331) and defining a shoulder (335), said piston (3) having an inner surface that defines an inner neck (347), said shoulder (335) pressing against said inner neck (347) during movement of said threaded spindle (33) from the non-braking position to the braking position.

5. The vehicle hydraulic brake device of claim 4, **characterized in that** said pushing end portion (334) of said threaded spindle (33) divides said piston chamber (30) into first and second chamber halves (348, 349), and is formed with a fluid passage (336), such that said first chamber half (348) is in fluid communication with said second chamber half (349) through said fluid passage (336), said piston (3) being adapted to be hydraulically driven by a hydraulic fluid that fills in said piston chamber (30) to move relative to said threaded spindle (33) and said housing (2) along the axis (X) from a non-stopping position to a stopping position, said inner neck (347) being in contact with said shoulder (335) when said piston (3) is disposed at the non-stopping position, and being spaced apart from said shoulder (335) when said piston (3) is disposed at the stopping position.
